# EUROPÄISCHE PATENTANMELDUNG

(11) **EP 1 014 081 A2**
(43) Veröffentlichungstag der Anmeldung: **28.06.2000**
(21) Anmeldenummer: 99125355.0
(22) Anmeldetag: 20.12.1999
(51) Int. Cl.: G01N 27/12

(54) **Verfahren und Vorrichtung zur quantitativen und qualitativen Bestimmung von Stoffen**

(30) Priorität: 23.12.1998 DE 19859399
(71) Anmelder: FORSCHUNGSZENTRUM JÜLICH GMBH, 52425 Jülich (DE)
(72) Erfinder: Meissner, Dieter, Prof. Dr., 4040 Linz (AT); Hiesgen, Renate, 81927 München (DE)

(57) **Zusammenfassung**

Die Erfindung betrifft ein Verfahren und eine Vorrichtung zur quantitativen und qualitativen Bestimmung von Stoffen oder Stoffkomponenten, die an eine Festkörperoberfläche, vorzugsweise einen photoelektrisch aktiven Halbleiter angrenzen. Der Halbleiter kann definiert belichtet werden. Der gemessene Strom wird insbesondere mit Referenzdaten verglichen. Anhand der Referenzdaten wird eine Auswertung in Bezug auf die Komponenten in qualitativer und/oder quantitativer Hinsicht vorgenommen.

In einer Ausgestaltung wird ein Rastertunnelmikroskop eingesetzt. Der Festkörper weist dann insbesondere eine unterschiedliche Zusammensetzung an seiner Oberfläche auf. Der Strom wird ortsauflösend gemessen. Die hieraus resultierende gesteigert Vielzahl an Informationen ist insbesondere auch zur qualitativen Analyse geeignet.

## Beschreibung

Die Erfindung betrifft ein Verfahren und eine Vorrichtung zur quantitativen und qualitativen Bestimmung von Stoffen oder Stoffkomponenten, die an eine Festkörpergrenzfläche angrenzen. Die Stoffe sind flüssig oder gasförmig.

Gemäß allgemeinem Fachwissen sind Halbleitersensoren bekannt, mit denen Stoffe oder Stoffkomponenten quantitativ und qualitativ bestimmt werden.

Ein Halbleiter weist verschiedene sogenannte Bänder (Leitungsbänder und Valenzbänder) auf, wie Lehrbüchern zur Festkörperphysik zu entnehmen ist. Grenzt ein Gas oder eine Flüssigkeit an den Halbleiter, so gleichen sich die Ferminiveaus durch Ladungsaustausch an der Grenzfläche aneinander an. Es entsteht eine sogenannte Doppelschicht, die z.B. als Dipolschicht ausgestaltet sein kann. Eine solche Doppelschicht wird z.B. mit Hilfe einer kommerziell erhältlichen Kelvinprobe gemessen.

Aufgabe der Erfindung ist die Bereitstellung eines neuen Verfahrens zu quantitativen und qualitativen Bestimmung von Komponenten, die an einen Festkörper angrenzen. Aufgabe der Erfindung ist ferner die Bereitstellung einer Vorrichtung zur Durchführung des Verfahrens.

Die Aufgabe der Erfindung wird durch ein Verfahren mit den Merkmalen des Haupt- sowie durch eine Vorrichtung mit Merkmalen des Nebenanspruchs gelöst. Vorteilhafte Ausgestaltungen ergeben sich aus den rückbezogenen Ansprüchen.

Verfahrensgemäß wird zum Beispiel durch Anlegen einer Spannung an den Festkörper ein Strom erzeugt. Handelt es sich bei dem Festkörper um einen photoelektrisch aktiven Halbleiter, so kann der Strom durch Belichten erzeugt werden. Der Strom wird mit Hilfe einer Gegenelektrode sowie eines geeigneten Meßinstrumentes (Amperemeter, Voltmeter) gemessen. Das gemessene Ergebnis wird zur quantitativen und/oder qualitativen Bestimmung von Stoffen oder Stoffkomponenten verwendet, die an den Festkörper angrenzen. Die Bestimmung erfolgt mit Hilfe von Referenzdaten. Unter Umständen kann auch in äquivalenter Weise eine durch Belichtung erzeugte Spannung anstelle des Stroms gemessen werden.

Geeignete Festkörper sind anorganische Halbleiter, zum Beispiel aus Si, SiC, GaAs, InP, PbS, CdTe, WSe₂, organische Halbleiter wie Phthalocyanine, Perylen-Derivate oder Polythophene oder Metalle wie Eisen, Kupfer usw., sowie Kombinationen hieraus, z.B. lichtempfindliche organische Verbindungen auf Oberflächen wie Gold oder Graphit. Beispiele für Stoffe oder Stoffkomponenten, die an den Festkörper angrenzen, sind Wasser mit oder ohne darin gelöste Stoffe, Iod, Luft und seine Bestandteile oder Metall- oder Adsorbatfilme. Insbesondere grenzen fluide Stoffe (Gase, Flüssigkeiten) an den Halbleiter an. Die Reproduzierbarkeit ist hier besonders gut gewährleistet.

Es ist vorzugsweise darauf zu achten, daß die bei der Ermittlung der Referenzdaten verwendete Belichtung oder angelegte Spannung mit der übereinstimmt, die bei der Messung verwendet wird. Andernfalls ist die erforderliche Vergleichbarkeit der Daten nur dann gewährleistet, wenn die Unterschiede durch eine Ausgleichsrechnung kompensiert werden. Zur Einstellung gleicher Spannungen und Beleuchtungen können entsprechende Meßgeräte und Regler vorgesehen werden. Diese sind jedoch nicht zwingend erforderlich und zwar insbesondere, wenn ohne eine von außen angelegte Spannung gemessen wird. Es kann dann eine Konstant - Spannungsquelle oder eine Lichtquelle mit konstanter Leistung verwendet werden.

Die Erfinder haben erkannt, daß der erzeugte Strom mit der Verbiegung der Bänder im Festkörper (Veränderung der Barrierenhöhe) variiert. Da eine Verbiegung von Bändern mit Veränderungen der Doppelschicht korreliert, stellt der Strom ein Maß für die an den Festkörper, - also insbesondere an den photoelektrisch aktiven Halbleiter - angrenzenden Stoffe oder Komponenten in qualitativer und quantitativer Hinsicht dar.

In einer vorteilhaften Ausgestaltung der Erfindung wird die Spitze eines Tunnelmikroskops als Gegenelektrode zur Messung des Stroms eingesetzt. Mit Hilfe des Tunnelmikroskops kann der Strom ortsauflösend bestimmt werden. Sehr genaue Messungen sind so möglich. Darüber hinaus erlaubt diese Ausgestaltung eine sehr schnelle Parallelbestimmung an sehr dicht nebeneinaderliegenden unterschiedlich auf angrenzende Stoffe reagierende Bereichen der Festkörper-Grenzflächen.

Bei Verwendung eines Tunnelmikroskops müssen die für die Messung vorgesehenen Ströme geringer als der Strom sein, der durch den Tunnelprozeß begrenzt wird. Dann korreliert der Strom mit den eingangs genannten physikalischen Vorgängen an der Grenze zwischen Halbleiter und angrenzendem Stoff. Diese Voraussetzung ist zuverlässig erfüllt, wenn die Tunnelspitze so nah an den Halbleiter herangefahren wird, daß die durch den Tunnelprozeß begrenzten Ströme wesentlich größer als die Ströme sind, die für die Messung vorgesehen werden.

In einer weiteren Ausgestaltung der Erfindung variiert die Zusammensetzung der Oberfläche des elektrisch aktiven Halbleiters in der zum Beispiel in aus der Druckschrift 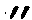 R. Hiesgen, D. Meissner, J. Phys. Chem. B, Vol. 102, No. 34, 1998, 6549-6557" bekannten Weise. Derartige Oberflächen bestehen insbesondere aus ternären II/VI-Halbleitern mit variierender Zusammensetzung. Beispiele sind: CdSe .. CdSeₓ Te₁₋ₓ .. CdTe, Metallinseln auf Halbleitern wie zum Beispiel Cu auf WSe₂, oder in ihrer Zusammensetzung variierende organische Filme auf Oberflächen. Verfahrensgemäß wird bei einem solchen Halbleiter der (Photo- oder Dunkel-) Strom ortsauflösend mit Hilfe eines Rastertunnelmikroskops gemessen. Die unterschiedliche Zusammensetzung der Oberfläche ermöglicht das Detektieren verschiedener Verbindungen, da die Zahl der Informationen zunimmt.

Bei einer Vorrichtung zur Durchführung des Verfahrens, bei dem die Zusammensetzung der Oberfläche des elektrisch aktiven Halbleiters variiert, handelt es sich um einen Vielfachsensor. Dieser ist nicht nur zur quantitativen, sondern insbesondere auch zur qualitativen Bestimmung der Stoffe oder Komponenten geeignet.

Eine Vorrichtung zur Durchführung des Verfahrens umfaßt einen elektrisch und/oder photoelektrisch aktiven Halbleiter. Mittel zur Strom- oder Spannungserzeugung (Belichtung des Halbleiters, Anlegen einer Spannung) eine Gegenelektrode nebst Meßgeräten zur Messung des erzeugten Stroms, einen Speicher, in dem Referenzdaten gespeichert sind, sowie eine Auswerteeinheit, die anhand von gemessenen Strom- und Referenzdaten eine qualitative und/oder quantitative Bestimmung von Komponenten vornimmt, die an die Oberfläche des photoelektrisch aktiven Halbleiters angrenzen. Bei der Messung des Photostromes ist insbesondere darauf zu achten, daß der Halbleiter definiert belichtet oder definiert eine Spannung angelegt wird und hierfür geeignete Mittel vorhanden sind. Anderenfalls würde z. B. der Photostrom aufgrund unterschiedlicher Belichtung variieren und so ohne weiteres keine Aussage über die Stoffe oder Komponenten ermöglichen.

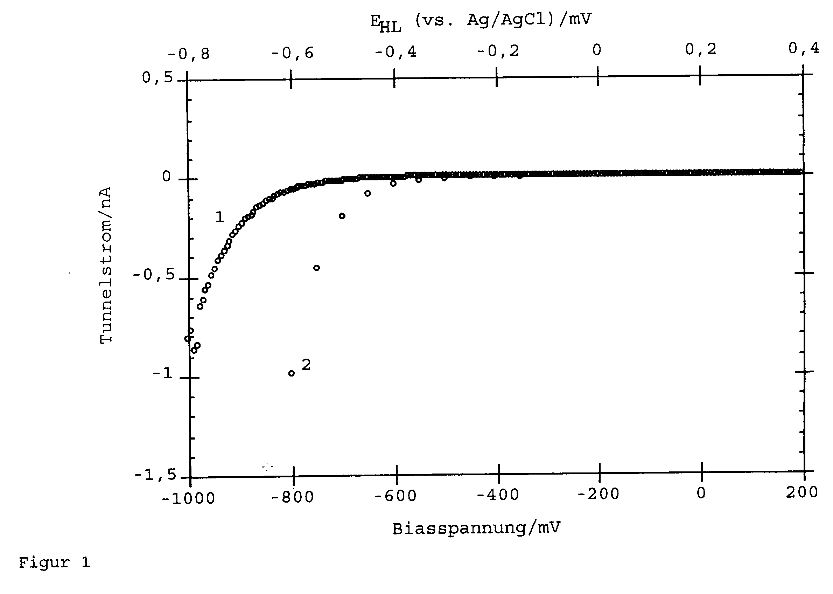

Die Figuren 1 bis 4 zeigen die Ergebnisse von Ausführungsbeispielen. Ein aus WSe₂ bestehender Halbleiter wurde eingesetzt und der Strom mit Hilfe eines Tunnelmikroskops gemessen.

Figur 1 zeigt die Strom/Spannungskurven aufgenommen an Luft und in Wasser. Der pH-Wert wurde mit H₂SO₄ eingestellt. Wasser bzw. Luft grenzen an den Halbleiter. Die Ergebnisse gemäß Figur 1 können als Referenzdaten für eine Wasserdetektion dienen. In dem gezeigten Beispiel würde eine Strommessung im Durchlaßbereich der Diodenkennlinie (negative Ströme unter Spannungskontrolle) erfolgen.

Aufgetragen ist der bei bestimmten von außen angelegten Spannungen zwischen der WSe₂-Elektrode und der Tunnelspitze fließende Strom. Bei der Messung in Wasser (pH-Wert mit 10 mM H₂SO₄ fixiert) ist zusätzlich das Potential der Tunnelmikroskop-Spitze gegen eine Silber/Silberchlorid-Elektrode konstant gehalten worden.

Die Abstandsregelung ist durch Einstellen eines sogenannten 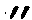 Set-point-Stromes" von 50 nA erfolgt.

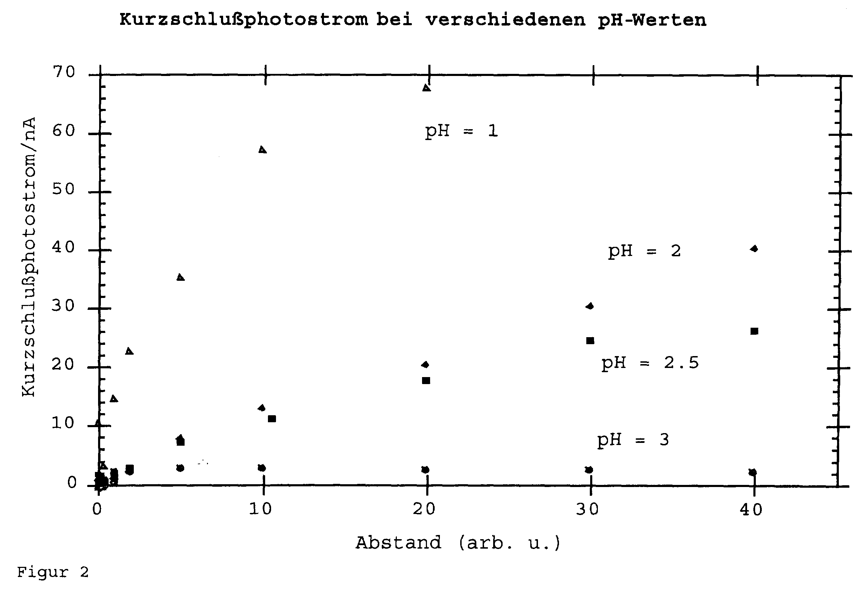

Figur 2 zeigt bei angrenzendem Wasser Kurzschluß-Photoströme bei Belichten einer WSe₂-Elektrode mit einem 5 mW HeNe-Laser in Wasser bei verschiedenen pH-Werten (eingestellt mit H₂SO₄ und NaOH), bei verschiedenen, über den Setpoint-Strom eingestellten Abständen, hier angegeben in willkürlichen Einheiten. Dieses Ausführungsbeispiel demonstriert die Verwendung des spannungslos gemessenen Kurzschluß-Photostromes zur Bestimmung des pH-Wertes einer Flüssigkeit.

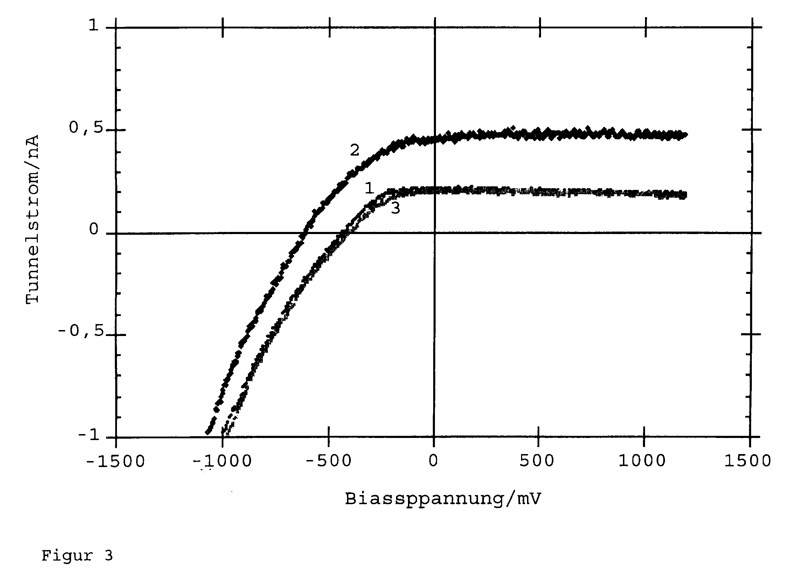

Im Fall der Figur 3 wird die Wirkung von Jod auf die Grenzfläche Halbleiter/Luft demonstriert. Figur 3 zeigt den Photostrom bzw. Die Strom/Spannungskennlinien an Luft ohne Jod (1), in Gegenwart von Jod (2), sowie nach Verflüchtigen des Jods (3). Eine Detektion von Jod kann z.B. durch Messen des Photostromes erfolgen (z.B. unter Kurzschlußbedingungen bei 0 mV), oder aber durch Messen des Vorwärtsstromes unter Spannungskontrolle mit oder ohne Beleuchtung erfolgen.

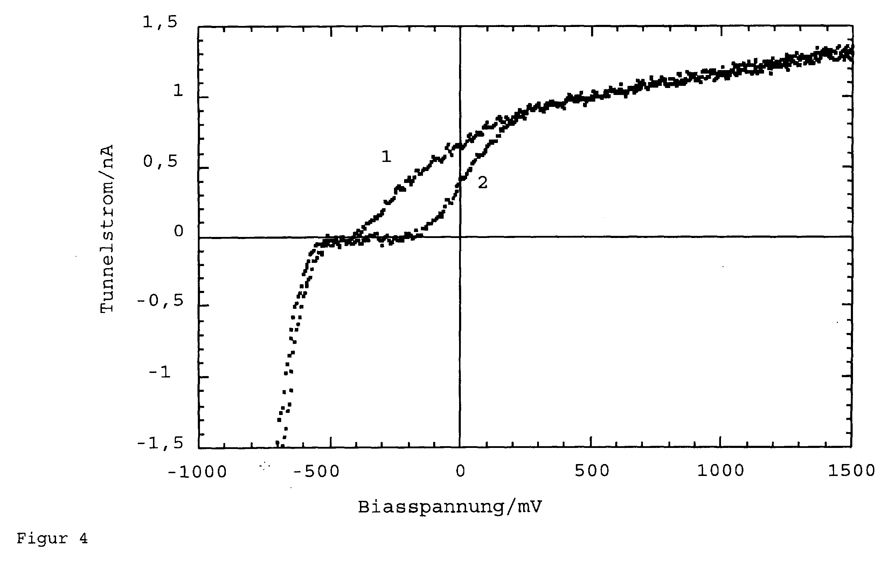

Figur 4 zeigt den Photostrom bzw. Strom-/Spannungskennlinien bei einer an den Halbleiter angrenzenden in wäßriger Lösung mit Eisenionen (Fe³⁺) gemäß 1 und ohne Eisenionen (Fe³⁺) gemäß 2. Zur quantitativen Bestimmung eignet sich zum Beispiel der bei - 0,2 V gemessene Strom.Bei Anlegen einer Spannung ist hier grundsätzlich der Vorwärtsstrom (Strom in Diodenrichtung) geeignet. Für die Belichtung des Halbleiters wurde ein He/Ne-Laser eingesetzt.

## Patentansprüche

1. Verfahren zur quantitativen und/oder qualitativen Bestimmung von Stoffen oder Stoffkomponenten, die an einen Festkörper angrenzen, mit den Schritten:
- ein Strom wird insbesondere durch Belichtung des Festkörpers oder Anlegen einer Spannung an den Festkörper erzeugt,
- der Strom wird gemessen,
- der gemessene Strom wird als Maß zur quantitativen und/oder qualitativen Bestimmung der an den Festkörper angrenzenden Stoffe oder Stoffkomponenten verwendet.

2. Verfahren nach Anspruch 1,
dadurch gekennzeichnet,
daß der Strom mit Hilfe eines Tunnelmikroskops gemessen wird.

3. Verfahren nach einem der vorhergehenden Ansprüche, bei dem als Festkörper ein photoelektrisch aktiver Halbleiter vorgesehen wird.

4. Verfahren nach einem der vorhergehenden Ansprüche,
dadurch gekennzeichnet,
daß die Zusammensetzung des photoelektrisch aktiven Halbleiters an der Oberfläche variiert.

5. Vorrichtung zur Durchführung des Verfahrens
- mit einem photoelektrisch aktiven Halbleiter,
- mit Mitteln zur Belichtung des Halbleiters oder zum Anlegen einer Spannung an den Halbleiter,
- mit Mitteln zur Messung des Stroms,
- mit einem Speicher, in dem Referenzdaten gespeichert sind,
- mit einer Auswerteeinheit, die die gemessenen Ströme mit den gespeicherten Referenzdaten vergleicht und hieraus eine quantitative und/oder qualitative Auswertung der an den photoelektrisch aktiven Halbleiter angrenzenden Stoffe oder Stoffkomponenten vornimmt.
